# EUROPEAN PATENT SPECIFICATION

(11) **EP 2 658 008 B1**
(45) Date of publication and mention of the grant of the patent: **10.10.2018**
(21) Application number: 13163675.5
(22) Date of filing: 15.04.2013
(51) Int. Cl.: H01M 2/10, H01M 2/12, H01M 10/04, H01M 10/613, H01M 10/625, H01M 10/647, H01M 10/6557

(54) **Battery Module**
Batteriemodul
Module de batterie

(30) Priority: 25.04.2012 US 201261638298 P; 13.03.2013 US 201313801831
(43) Date of publication of application: 30.10.2013
(73) Proprietor: Samsung SDI Co., Ltd., Yongin-si, Gyeonggi-do (KR); Robert Bosch GmbH, 70442 Stuttgart (DE)
(72) Inventor: Kim, Myung-Chul, Yongin-si (KR)
(74) Representative: Gulde & Partner

(56) References cited:
- EP-A1- 1 852 924
- EP-A1- 2 031 672
- EP-A1- 2 393 140
- WO-A1-2011/013767
- WO-A2-2012/151190
- JP-A- 2002 298 806
- JP-A- 2008 016 259
- US-A- 3 546 023

## Description

An aspect of the present invention relates to a battery module, and more particularly, to a battery module for improving the accommodation efficiency of battery cells.

### DESCRPTION OF THE RELATED ART

A high-power battery module using a non-aqueous electrolyte with high energy density has recently been developed. The high-power battery module is configured as a large-capacity battery module manufactured by connecting a plurality of battery cells in series so as to be used in driving motors of devices requiring high power, e.g., electric vehicles and the like.

Typically, the battery module may include a plurality of battery cells. However, since the plurality of battery cells are not efficiently arranged in a space, an unnecessary interval between the battery cells exists wide, and therefore, the accommodation efficiency of the battery cells is decreased.

JP 2008 016259 A discloses a battery module in which at least two battery cells are positioned side by side as a first group of battery cells facing one side of the barrier main body and at least two battery cells are positioned side by side as a second group of battery cells facing the opposite side of the barrier main body.

EP 2 031 672 A1 discloses a battery module having a flange covering the outline of a barrier main body and battery cells.

EP 1 852 924 A1 discloses a battery module having regularly arrayed protrusions in a barrier main body.

EP 2 393 140 A, JP 2002 298806 A and US 3 546 023 A disclose the battery module of the preamble of claim 1.

### SUMMARY

Embodiments provide a battery module having a barrier with a new structure. Embodiments also provide a battery module for improving the accommodation efficiency of battery cells.

According to the invention, a battery module is provided as defined in claim 1. In one embodiment preferably each of the cap plates comprises terminal portions and/ or a vent portion through which gas may be exhausted, wherein in each of the first and second flange portions terminal recess portions corresponding to the respective terminal portions and/ or a vent recess portion corresponding to the vent portion are formed.

In another embodiment, in the first flange portion terminal recess portions corresponding to the respective terminal portions. and/ or a vent recess portion corresponding to the vent portion are formed.

In a preferred embodiment, the barrier further includes a plurality of protruding portions provided on the barrier main body.

Preferably, the plurality of protruding portions is arranged so that adjacent protruding portions are spaced apart at a predetermined interval F.

A plurality of refrigerant holes may be formed in the third and fourth flange portions, respectively.

In that case, the refrigerant holes are preferably positioned to correspond to the predetermined interval F formed between the adjacent protruding portions for realising a plurality of flow paths of a refrigerant for cooling the battery cells.

Further, the battery module may include a housing accommodating the battery cells and the barrier.

Preferably, the housing includes a pair of end plates spaced apart from each other in one direction and accommodating the battery cells, and side brackets connecting the pair of end plates to each other.

In one embodiment, the partition wall comprises at least one recess portion.

As described above, according to the present invention, it is possible to provide a battery module having a barrier with a structure in which a new partition wall is formed.

Further, according to the present invention, it is possible to provide a battery module for reducing production cost and improving process efficiency.

### BRIEF DESCRIPTION OF THE DRAWINGS

The accompanying drawings, together with the specification, illustrate exemplary embodiments of the present invention, and, together with the description, serve to explain the principles of the present invention.
FIG. 1 is a perspective view of a battery module according to an embodiment of the present invention.
FIG. 2 is an exploded perspective view showing a portion of FIG. 1.
FIG. 3 is an assembled perspective view showing a portion of FIG. 2.
FIG. 4 is a perspective view illustrating a barrier according to the embodiment of the present invention.
FIG. 5 is a perspective view of a battery module according to another embodiment of the present invention.
FIG. 6 is an exploded perspective view showing a portion of FIG. 5.
FIG. 7 is an assembled perspective view showing a portion of FIG. 6.
FIG. 8 is a perspective view illustrating a barrier according to the embodiment of the present invention.

### DETAILED DESCRIPTION

In the following detailed description, only certain exemplary embodiments of the present invention have been shown and described, simply by way of illustration. In addition, when an element is referred to as being "on" another element, it can be directly on the another element or be indirectly on the another element with one or more intervening elements interposed therebetween. Also, when an element is referred to as being "connected to" another element, it can be directly connected to the another element or be indirectly connected to the another element with one or more intervening elements interposed therebetween. Hereinafter, like reference numerals refer to like elements.

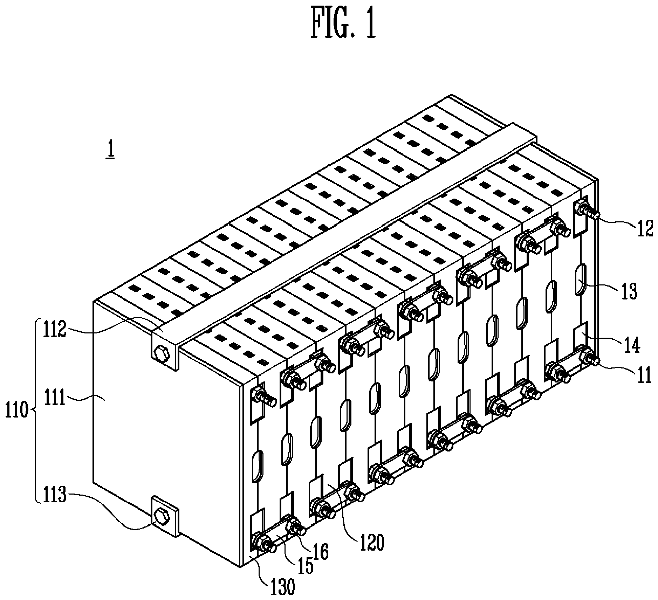

Hereinafter, a battery module according to an embodiment of the present invention will be described with reference to FIGS. 1 to 4.

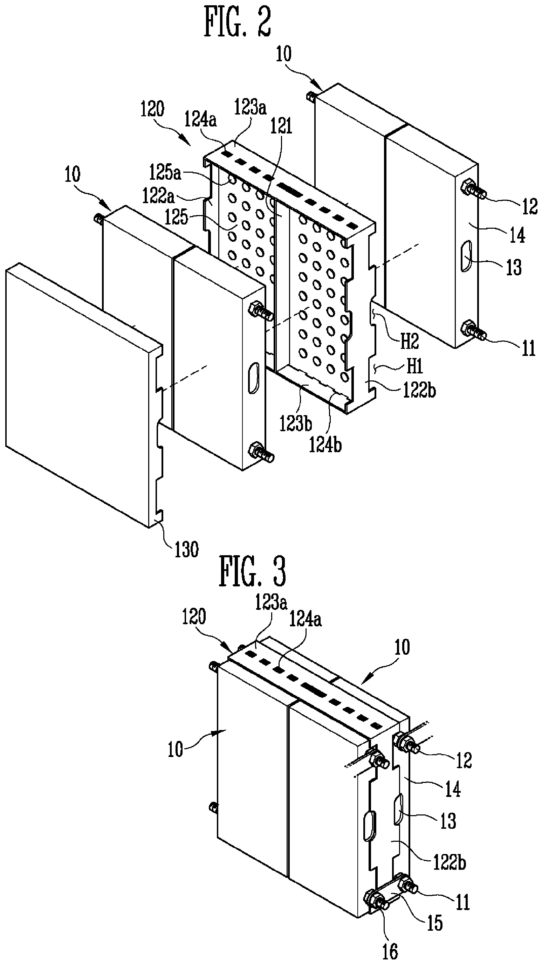

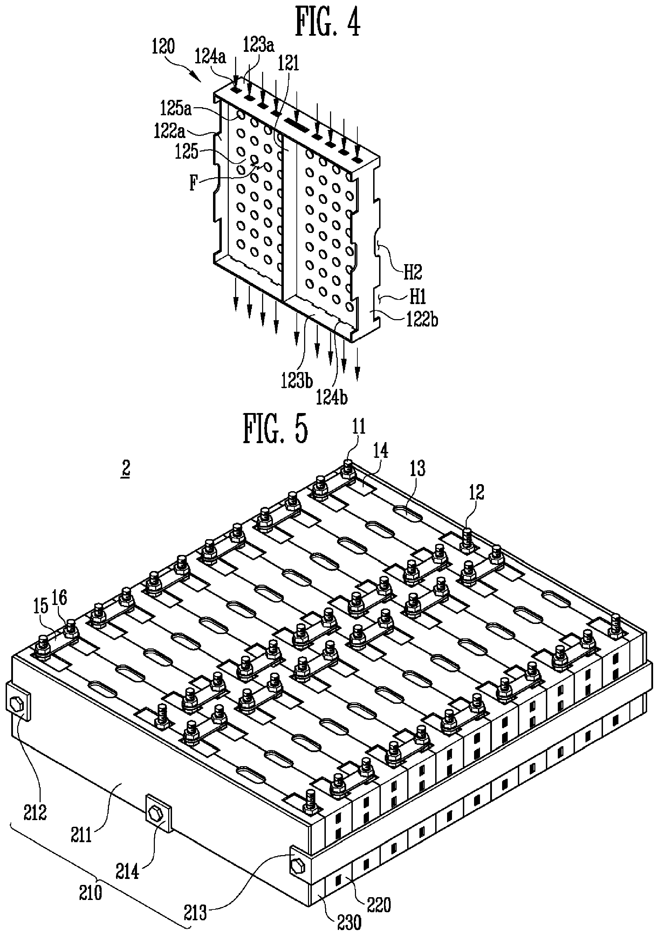

FIG. 1 is a perspective view of a battery module according to an embodiment of the present invention. FIG. 2 is an exploded perspective view showing a portion of FIG. 1. FIG. 3 is an assembled perspective view showing a portion of FIG. 2. FIG. 4 is a perspective view illustrating a barrier according to the embodiment of the present invention.

Referring to FIGS. 1 and 2, the battery module 1 according to this embodiment includes a barrier 120 having a partition wall 121 formed to accommodate at least two battery cells 10; and the at least two battery cells 10 accommodated by the partition wall 121, and each having a cap plate 14 provided with terminal portions 11 and 12 and a vent portion 13 through which gas may be exhausted.

Here, the barrier 120 further has a barrier main body 125 facing a long side surface of the battery cell 10, and first to fourth flange portions 122a, 122b, 123a and 123b formed to surround the outline of the barrier main body 125 and accommodating the battery cell 10 together with the partition wall 121.

The first and second flange portions 122a and 122b cover the respective cap plates 14 of the neighboring battery cells 10. The third and fourth flange portions 123a and 123b are provided between the first and second flange portions 122a and 122b so as to cover at least one side surface of each of the battery cells 10.

Here, terminal recesses H1 corresponding to the respective terminal portions 11 and 12 and a vent recess H2 corresponding to the vent portion are formed in each of the first and second flange portions 122a and 122b.

In special embodiments, the recesses may be formed as holes, respectively.

A plurality of protruding portions 125a is further provided to the barrier 120. Here, the plurality of protruding portions 125a are provided on the barrier main body 125 and allow the battery cell 10 and the barrier 120 to be spaced apart at a predetermined interval. The plurality of protruding portions 125a are arranged so that adjacent protruding portions 125a are spaced apart at a predetermined interval F (See FIG. 4).

Meanwhile, the barrier 120 positioned in the middle of the battery module 1 may accommodate battery cells 10 in both directions of the barrier main body 125. Each of the barriers 130 respectively positioned at both ends of the battery module 1 may accommodate the battery cell 10 in one direction of the barrier main body 125.

Referring to FIGS. 2 to 4, first and second refrigerant holes 124a and 124b are formed in the third and fourth flange portions 123a and 123b, respectively. Here, the first and second refrigerant holes 124a and 124b are formed to correspond to the predetermined interval F formed between the adjacent protruding portions 125a. Thus, the first and second refrigerant holes 124a and 124b provide a flow path of a refrigerant for cooling the battery cells 10.

As charging/discharging of the battery cell 10 is performed, gas may be caused by electrode plates and residual products of an electrolyte. The gas may be exhausted through the vent portion 13.

The battery cell 10 may include a battery case having an opening region and the cap plate 14 sealing the opening region. The battery case accommodates an electrode assembly and the electrolyte. Here, the electrode assembly includes a positive electrode plate, a negative electrode plate and a separator interposed between these electrode plates. The first and second terminal portions 11 and 12 connected to the positive and second electrode plates are provided at both ends of the cap plate 14, respectively. Here, the first and second terminal portions 11 and 12 are protruded to the outside of the cap plate 14. The positive and negative electrode plates constituting the electrode assembly generate electrochemical energy by reacting with the electrolyte, and the electrochemical energy is transferred to the outside through the first and second terminal portions 11 and 12.

When the pressure of the gas generated in the battery cell 10 is a predetermined value or more, the vent portion 13 provided between the first and second terminal portions 11 and 12 of the cap plate 14 may serve as a path along which the gas is exhausted from the battery cell 10. Thus, the vent portion prevents the battery cell 10 from being damaged by an external pressure of the battery cell 10.

According to this embodiment, bottom surfaces respectively facing the side surfaces on which the terminal portions 11 and 12 are formed among the short side surfaces of the neighboring battery cells 10 are disposed opposite to each other by means of the partition wall 121. That is, a plurality of battery cells is accommodated with the partition wall 121 of one barrier 120, interposed therebetween. In this case, the bottom surfaces of the battery cells 10 are arranged in parallel to face each other. Accordingly, the unnecessary interval between the battery cells 10 can be minimized, thereby efficiently accommodating the battery cells 10 in a narrow space.

The vent portions 13 are provided at central portions of the plurality of battery cells 10, respectively. The vent portions 13 are arranged on an approximately straight line along the arranged battery cells 10. The first and second terminal portions 11 and 12 of the neighboring battery cells 10 may be electrically connected through a bus-bar 15 formed of metal, and the bus-bar 15 may be fixed to the first and second terminal portions 11 and 12 using a member such as a nut 16.

Meanwhile, the battery module 1 may further include a housing 110 accommodating the battery cells 10 and the barriers 120. The housing 110 may include a pair of end plates 111 accommodating the battery cells 10 and provided to be spaced part from each other in one direction, and side brackets 112 and 113 connecting the pair of end plates 111 to each other.

The pair of end plates 111 are respectively provided to come in surface contact with the outermost battery cells 10 so as to press the plurality of the battery cells 10 toward the inside of the battery cells 10. The side bracket 112 is connected to one and the other ends of the pair of end plates 111 so as to support both side surfaces of the plurality of battery cells 10.

Hereinafter, a battery module according to another embodiment of the present invention will be described with reference to FIGS. 5 to 8.

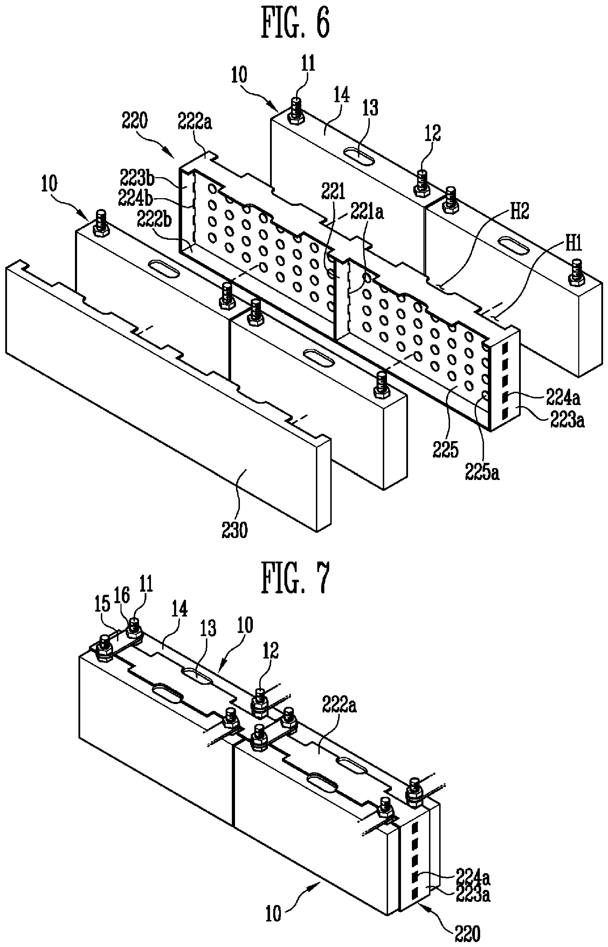

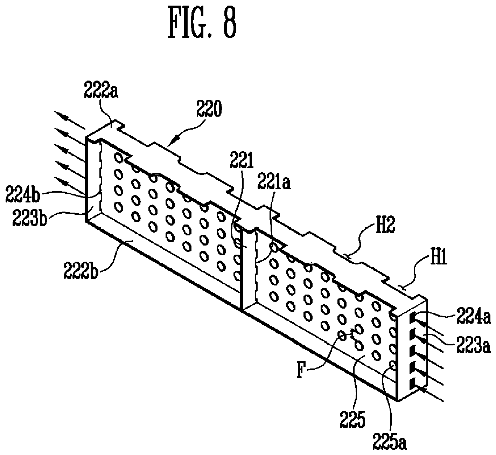

FIG. 5 is a perspective view of a battery module according to another embodiment of the present invention. FIG. 6 is an exploded perspective view showing a portion of FIG. 5. FIG. 7 is an assembled perspective view showing a portion of FIG. 6. FIG. 8 is a perspective view illustrating a barrier according to the embodiment of the present invention.

Referring to FIGS. 5 and 6, the battery module 2 according to this embodiment includes a barrier 220 having a partition wall 221 formed to accommodate at least two battery cells 10; and the at least two battery cells 10 accommodated by the partition wall 221, and each having a cap plate 14 provided with terminal portions 11 and 12 and a vent portion 13 through which gas is exhausted.

Here, the barrier 220 further has a barrier main body 225 facing a long side surface of the battery cell 10, and first to fourth flange portions 222a, 222b, 223a and 223b formed to surround the outline of the barrier main body 225 and accommodating the battery cell 10 together with the partition wall 221.

The first flange portion 222a covers a plurality of neighboring cap plates, and the second flange portion 222b is positioned to face the first flange portion 222a. The third and fourth flange portions 223a and 223b are provided between the first and second flange portions 222a and 222b so as to cover at least one side surface of each of the battery cells 10.

Here, terminal recesses H1 corresponding to the respective terminal portions 11 and 12 and a vent recess H2 corresponding to the vent portion are formed in the first flange portion 222a. In special embodiments, the recesses may be formed as holes, respectively.

A plurality of protruding portions 225a is further provided to the barrier 220. Here, the plurality of protruding portions 225a are provided on the barrier main body 225 and allow the battery cell 10 and the barrier 220 to be spaced apart at a predetermined interval. The plurality of protruding portions 225a are arranged so that adjacent protruding portions 225a are spaced apart at a predetermined interval F (See FIG. 8).

Meanwhile, the barrier 220 positioned in the middle of the battery module 2 may accommodate battery cells 10 in both directions of the barrier main body 225. Each of the barriers 230 respectively positioned at both ends of the battery module 2 may accommodate the battery cell 10 in one direction of the barrier main body 225.

Referring to FIGS. 6 to 8, first and second refrigerant holes 224a and 224b are formed in the third and fourth flange portions 223a and 223b, respectively. Here, the first and second refrigerant holes 224a and 224b are formed to correspond to the predetermined interval F formed between the adjacent protruding portions 225a. Thus, the first and second refrigerant holes 224a and 224b become a flow path of a refrigerant for cooling the battery cells 10.

As charging/discharging of the battery cell 10 is performed, gas may be caused by electrode plates and residual products of an electrolyte. The gas may be exhausted through the vent portion 13.

The battery cell 10 may include a battery case having an opening region and the cap plate 14 sealing the opening region. The battery case accommodates an electrode assembly and the electrolyte. Here, the electrode assembly includes a positive electrode plate, a negative electrode plate and a separator interposed between these electrode plates. The first and second terminal portions 11 and 12 connected to the positive and second electrode plates are provided at both ends of the cap plate 14, respectively. Here, the first and second terminal portions 11 and 12 are protruded to the outside of the cap plate 14. The positive and negative electrode plates constituting the electrode assembly generate electrochemical energy by reacting with the electrolyte, and the electrochemical energy is transferred to the outside through the first and second terminal portions 11 and 12.

When the pressure of the gas generated in the battery cell 10 is a predetermined value or more, the vent portion 13 provided between the first and second terminal portions 11 and 12 of the cap plate 14 may serve as a path along which the gas is exhausted from the battery cell 10. Thus, the vent portion prevents the battery cell 10 from being damaged by an external pressure of the battery cell 10.

According to this embodiment, short side surfaces provided between bottom surfaces and side surfaces on which the terminal portions 11 and 12 are formed among the short side surfaces of the neighboring battery cells 10 are disposed opposite to each other by means of the partition wall 221. That is, a plurality of battery cells is accommodated with the partition wall 212 of one barrier 220, interposed therebetween. In this case, the side surfaces of the battery cells 10 are arranged in parallel to face each other. Accordingly, the unnecessary interval between the battery cells 10 can be minimized, thereby efficiently accommodating the battery cells 10 in a narrow space. In the partition wall 221, recesses 221a are arranged.

The vent portions 13 are provided at central portions of the plurality of battery cells 10, respectively. The vent portions 13 are arranged on an approximately straight line along the arranged battery cells 10. The first and second terminal portions 11 and 12 of the neighboring battery cells 10 may be electrically connected through a bus-bar 15 formed of metal, and the bus-bar 15 may be fixed to the first and second terminal portions 11 and 12 using a member such as a nut 16.

Meanwhile, the battery module 2 may further include a housing 210 accommodating the battery cells 10 and the barriers 220. The housing 210 may include a pair of end plates 211 accommodating the battery cells 10 and provided to be spaced part from each other in one direction, and side brackets 212 and 213 and a bottom bracket 214, which connect the pair of end plates 211 to each other.

The pair of end plates 211 are respectively provided to come in surface contact with the outermost battery cells 10 so as to press the plurality of the battery cells 10 toward the inside of the battery cells 10. The side bracket 212 is connected to one and the other ends of the pair of end plates 211 so as to support both side surfaces of the plurality of battery cells 10. The bottom bracket 214 supports bottom surfaces of the plurality of battery cells 10.

Here, terminal recesses H1 corresponding to the respective terminal portions 11 and 12 and a vent recess H2 corresponding to the vent portion are formed in the first flange portion 222a. In special embodiments, the recesses may be formed as holes, respectively.

A plurality of protruding portions 225a is further provided to the barrier 220. Here, the plurality of protruding portions 225a are provided on the barrier main body 225 and allow the battery cell 10 and the barrier 220 to be spaced apart at a predetermined interval. The plurality of protruding portions 225a are arranged so that adjacent protruding portions 225a are spaced apart at a predetermined interval F (See FIG. 8).

Meanwhile, the barrier 220 positioned in the middle of the battery module 2 may accommodate battery cells 10 in both directions of the barrier main body 225. Each of the barriers 230 respectively positioned at both ends of the battery module 2 may accommodate the battery cell 10 in one direction of the barrier main body 225.

Referring to FIGS. 6 to 8, first and second refrigerant holes 224a and 224b are formed in the third and fourth flange portions 223a and 223b, respectively. Here, the first and second refrigerant holes 224a and 224b are formed to correspond to the predetermined interval F formed between the adjacent protruding portions 225a. Thus, the first and second refrigerant holes 224a and 224b become a flow path of a refrigerant for cooling the battery cells 10.

As charging/discharging of the battery cell 10 is performed, gas may be caused by electrode plates and residual products of an electrolyte. The gas may be exhausted through the vent portion 13.

The battery cell 10 may include a battery case having an opening region and the cap plate 14 sealing the opening region. The battery case accommodates an electrode assembly and the electrolyte. Here, the electrode assembly includes a positive electrode plate, a negative electrode plate and a separator interposed between these electrode plates. The first and second terminal portions 11 and 12 connected to the positive and second electrode plates are provided at both ends of the cap plate 14, respectively. Here, the first and second terminal portions 11 and 12 are protruded to the outside of the cap plate 14. The positive and negative electrode plates constituting the electrode assembly generate electrochemical energy by reacting with the electrolyte, and the electrochemical energy is transferred to the outside through the first and second terminal portions 11 and 12.

When the pressure of the gas generated in the battery cell 10 is a predetermined value or more, the vent portion 13 provided between the first and second terminal portions 11 and 12 of the cap plate 14 may serve as a path along which the gas is exhausted from the battery cell 10. Thus, the vent portion prevents the battery cell 10 from being damaged by an external pressure of the battery cell 10.

According to this embodiment, short side surfaces provided between bottom surfaces and side surfaces on which the terminal portions 11 and 12 are formed among the short side surfaces of the neighboring battery cells 10 are disposed opposite to each other by means of the partition wall 221. That is, a plurality of battery cells is accommodated with the partition wall 212 of one barrier 220, interposed therebetween. In this case, the side surfaces of the battery cells 10 are arranged in parallel to face each other. Accordingly, the unnecessary interval between the battery cells 10 can be minimized, thereby efficiently accommodating the battery cells 10 in a narrow space. In the partition wall 221, recesses 221a are arranged.

The vent portions 13 are provided at central portions of the plurality of battery cells 10, respectively. The vent portions 13 are arranged on an approximately straight line along the arranged battery cells 10. The first and second terminal portions 11 and 12 of the neighboring battery cells 10 may be electrically connected through a bus-bar 15 formed of metal, and the bus-bar 15 may be fixed to the first and second terminal portions 11 and 12 using a member such as a nut 16.

Meanwhile, the battery module 2 may further include a housing 210 accommodating the battery cells 10 and the barriers 220. The housing 210 may include a pair of end plates 211 accommodating the battery cells 10 and provided to be spaced part from each other in one direction, and side brackets 212 and 213 and a bottom bracket 214, which connect the pair of end plates 211 to each other.

The pair of end plates 211 are respectively provided to come in surface contact with the outermost battery cells 10 so as to press the plurality of the battery cells 10 toward the inside of the battery cells 10. The side bracket 212 is connected to one and the other ends of the pair of end plates 211 so as to support both side surfaces of the plurality of battery cells 10. The bottom bracket 214 supports bottom surfaces of the plurality of battery cells 10.

## Claims

1. A battery module (1), including:
a plurality of battery cells (10), and
a barrier (120, 220) comprising a barrier main body (125, 225), wherein each of the battery cells (10) comprises a cap plate (14) and at least one side surface,
wherein at least two battery cells (10) are positioned side by side as a first group of battery cells facing one side of the barrier main body (125, 225) and at least two battery cells (10) are positioned side by side as a second group of battery cells facing the opposite side of the barrier main body (125, 225),
the barrier (120, 220) comprises a partition wall (121, 221) provided on at least one side of the barrier main body (125, 225), wherein the partition wall (121, 221) is positioned between the battery cells (10) of the respective first and/or second group of battery cells, **characterised in that**
the barrier (120, 220) comprises flange portions (122a, 122b, 123a, 123b) formed to surround the outline of the barrier main body (125, 225) and the respective group of battery cells together with the partition wall (121, 221),
wherein the cap plates (14) are positioned on opposite sides of the respective group of battery cells, and the flange portions (122a, 122b, 123a, 123b) include first and second flange portions (122a, 122b) covering the respective cap plates (14) of the battery cells (10), or
wherein the cap plates (14) are positioned on the same side of the respective group of battery cells, and the flange portions (122a, 122b, 123a, 123b) include a first flange portion (122a) covering the cap plates (14) of the battery cells (10) of the respective group of battery cells, and a second flange portion (122b) positioned to face the first flange portion (122a), and
wherein the flange portions (122a, 122b, 123a, 123b) further include third and fourth flange portions (123a, 123b) provided between the first and second flange portions (122a, 122b) so as to cover one side surface of at least one battery cell (10) of the respective group of battery cells.

2. The battery module according to claim 1, **characterized in that** each of the cap plates (14) comprises terminal portions (11, 12) and/ or a vent portion (13) through which gas may be exhausted, wherein if the cap plates (14) are positioned on opposite sides of the respective group of battery cells, in each of the first and second flange portions (122a, 122b) terminal recess portions (H1) corresponding to the respective terminal portions (11, 12) and/ or a vent recess portion (H2) corresponding to the vent portion (13) are formed.

3. The battery module according to claim 1, **characterized in that** each of the cap plates (14) comprises terminal portions (11, 12) and/ or a vent portion (13) through which gas may be exhausted, wherein if the cap plates (14) are positioned on the same side of the respective group of battery cells, in the first flange portion (122a) terminal recess portions (H1) corresponding to the respective terminal portions (11, 12) and/ or a vent recess portion (H2) corresponding to the vent portion (13) are formed.

4. The battery module according to at least one of the preceding claims, **characterized in that** the barrier (120, 220) further includes a plurality of protruding portions (125a, 225a) provided on the barrier main body (125, 225).

5. The battery module according to claim 4, **characterized in that** the plurality of protruding portions (125a, 225a) are arranged so that adjacent protruding portions (125a, 225a) are spaced apart at a predetermined interval (F).

6. The battery module according to at least one of the claims 1 to 5, **characterized in that** a plurality of refrigerant holes (124a, 124b, 224a, 224b) is formed in the third and fourth flange (123a, 123b) portions, respectively.

7. The battery module according to claim 6, **characterized in that** the refrigerant holes (124a, 124b, 224a, 224b) are positioned to correspond to the predetermined interval (F) formed between the adjacent protruding portions (125a, 225a) for realising a plurality of flow paths of a refrigerant for cooling the battery cells (10).

8. The battery module according to at least one of the preceding claims, **characterized in that** the battery module (1) includes a housing (110, 210) accommodating the battery cells (10) and the barrier (120, 220).

9. The battery module according to claim 8, **characterized in that** the housing (110, 210) includes a pair of end plates (130, 230) spaced apart from each other in one direction and accommodating the battery cells (10), and side brackets (112, 113, 212, 213) connecting the pair of end plates (130, 230) to each other.

10. The battery module according to any of the claims 1 to 9, **characterized in that** the partition wall (221) comprises at least one recess portion (221a).

## Patentansprüche

1. Batteriemodul (1), enthaltend:
mehrere Batteriezellen (10); und
eine Sperre (120, 220), die einen Sperrenhauptkörper (125, 225) umfasst,
wobei jede der Batteriezellen (10) eine Kappenplatte (14) und zumindest eine Seitenfläche umfasst,
wobei zumindest zwei Batteriezellen (10) Seite an Seite als eine erste Gruppe von Batteriezellen positioniert sind, die einer Seite des Sperrenhauptkörpers (125, 225) zugekehrt ist, und zumindest zwei Batteriezellen (10) Seite an Seite als eine zweite Gruppe von Batteriezellen positioniert sind, die der gegenüberliegenden Seite des Sperrenhauptkörpers (125, 225) zugekehrt ist,
wobei die Sperre (120, 220) eine Trennwand (121, 221) umfasst, die auf zumindest einer Seite des Sperrenhauptkörpers (125, 225) vorgesehen ist, wobei die Trennwand (121, 221) zwischen den Batteriezellen (10) der jeweiligen ersten und/oder zweiten Gruppe von Batteriezellen positioniert ist, **dadurch gekennzeichnet, dass**
die Sperre (120, 220) Flanschabschnitte (122a, 122b, 123a, 123b) umfasst, die zum Umgeben der Kontur des Sperrenhauptkörpers (125, 225) und der jeweiligen Gruppe von Batteriezellen zusammen mit der Trennwand (121, 221) ausgebildet sind,
wobei die Kappenplatten (14) auf gegenüberliegenden Seiten der jeweiligen Gruppe von Batteriezellen positioniert sind und die Flanschabschnitte (122a, 122b, 123a, 123b) erste und zweite Flanschabschnitte (122a, 122b) enthalten, die die jeweiligen Kappenplatten (14) der Batteriezellen (10) abdecken, oder
wobei die Kappenplatten (14) auf derselben Seite der jeweiligen Gruppe von Batteriezellen positioniert sind und die Flanschabschnitte (122a, 122b, 123a, 123b) einen ersten Flanschabschnitt (122a), der die Kappenplatten (14) der Batteriezellen (10) der jeweiligen Gruppe von Batteriezellen abdeckt, und einen zweiten Flanschabschnitt (122b) enthalten, der derart positioniert ist, dass er dem ersten Flanschabschnitt (122a) zugekehrt ist, und
wobei die Flanschabschnitte (122a, 122b, 123a, 123b) ferner dritte und vierte Flanschabschnitte (123a, 123b) enthalten, die derart zwischen den ersten und zweiten Flanschabschnitten (122a, 122b) vorgesehen sind, dass sie eine Seitenfläche von zumindest einer Batteriezelle (10) der jeweiligen Gruppe von Batteriezellen abdecken.

2. Batteriemodul nach Anspruch 1, **dadurch gekennzeichnet, dass** jede der Kappenplatten (14) Endabschnitte (11, 12) und/oder einen Lüftungsabschnitt (13) umfassen, durch den Gas abgelassen werden kann, wobei, wenn die Kappenplatten (14) auf gegenüberliegenden Seiten der jeweiligen Gruppe von Batteriezellen positioniert sind, in jedem der ersten und zweiten Flanschabschnitte (122a, 122b) Endaussparungsabschnitte (H1) entsprechend den jeweiligen Endabschnitten (11, 12) und/oder ein Lüftungsaussparungsabschnitt (H2) entsprechend dem Lüftungsabschnitt (13) ausgebildet sind.

3. Batteriemodul nach Anspruch 1, **dadurch gekennzeichnet, dass** jede der Kappenplatten (14) Endabschnitte (11, 12) und/oder einen Lüftungsabschnitt (13) umfassen, durch den Gas abgelassen werden kann, wobei, wenn die Kappenplatten (14) auf derselben Seite der jeweiligen Gruppe von Batteriezellen positioniert sind, im ersten Flanschabschnitt (122a) Endaussparungsabschnitte (H1) entsprechend den jeweiligen Endabschnitten (11, 12) und/oder ein Lüftungsaussparungsabschnitt (H2) entsprechend dem Lüftungsabschnitt (13) ausgebildet sind.

4. Batteriemodul nach einem der vorhergehenden Ansprüche, **dadurch gekennzeichnet, dass** die Sperre (120, 220) ferner mehrere vorstehende Abschnitte (125a, 225a) enthält, die am Sperrenhauptkörper (125, 225) vorgesehen sind.

5. Batteriemodul nach Anspruch 4, **dadurch gekennzeichnet, dass** die mehreren vorstehenden Abschnitte (125a, 225a) derart angeordnet sind, dass benachbarte vorstehende Abschnitte (125a, 225a) in einem vorgegebenen Intervall (F) beabstandet sind.

6. Batteriemodul nach einem der Ansprüche 1 bis 5, **dadurch gekennzeichnet, dass** mehrere Kühlmittellöcher (124a, 124b, 224a, 224b) im dritten bzw. vierten Flansch (123a, 123b) ausgebildet sind.

7. Batteriemodul nach Anspruch 6, **dadurch gekennzeichnet, dass** die Kühlmittellöcher (124a, 124b, 224a, 224b) derart positioniert sind, dass sie dem vorgegebenen Intervall (F) entsprechen, der zwischen den benachbarten vorstehenden Abschnitten (125a, 225a) ausgebildet ist, um mehrere Stromwege eines Kühlmittels zum Kühlen der Batteriezellen (10) auszuführen.

8. Batteriemodul nach einem der vorhergehenden Ansprüche, **dadurch gekennzeichnet, dass** das Batteriemodul (1) ein Gehäuse (110, 210) enthält, das die Batteriezellen (10) und die Sperre (120, 220) aufnimmt.

9. Batteriemodul nach Anspruch 8, **dadurch gekennzeichnet, dass** das Gehäuse (110, 210) ein Paar Endplatten (130, 230), welche in einer Richtung zueinander beabstandet sind und die Batteriezellen (10) aufnehmen, und Seitenhalterungen (112, 113, 212, 213) enthält, welche das Paar Endplatten (130, 230) miteinander verbinden.

10. Batteriemodul nach einem der Ansprüche 1 bis 9, **dadurch gekennzeichnet, dass** die Trennwand (221) zumindest einen Aussparungsabschnitt (221a) enthält.

## Revendications

1. Module de batterie (1) comprenant :
une pluralité d'éléments de batterie (10), et
une barrière (120, 220) comprenant un corps principal de barrière (125, 225),
dans lequel chacun des éléments de batterie (10) comprend une plaque de capuchon (14) et au moins une surface latérale,
dans lequel :
au moins deux éléments de batterie (10) sont positionnés côte à côte en tant que premier groupe d'éléments de batterie faisant face à un côté du corps principal de barrière (125, 225) et au moins deux éléments de batterie (10) sont positionnés côte à côte en tant que second groupe d'éléments de batterie faisant face au côté opposé du corps principal de barrière (125, 225),
la barrière (120, 220) comprend une paroi de séparation (121, 221) prévue sur au moins un côté du corps principal de barrière (125, 225), la paroi de séparation (121, 221) étant positionnée entre les éléments de batterie (10) des premier et/ou second groupes respectifs d'éléments de batterie, **caractérisé en ce que** :
la barrière (120, 220) comprend des parties de bride (122a, 122b, 123a, 123b) formées pour entourer le contour du corps principal de barrière (125, 225) et le groupe respectif d'éléments de batterie conjointement avec la paroi de séparation (121, 221),
dans lequel les plaques de capuchon (14) sont positionnées sur les côtés opposés du groupe respectif d'éléments de batterie, et les parties de bride (122a, 122b, 123a, 123b) comprennent les première et seconde parties de bride (122a, 122b) recouvrant les plaques de capuchon (14) respectives des éléments de batterie (10), ou
dans lequel les plaques de capuchon (14) sont positionnées du même côté du groupe respectif d'éléments de batterie, et les parties de bride (122a, 122b, 123a, 123b) comprennent une première partie de bride (122a) recouvrant les plaques de capuchon (14) des éléments de batterie (10) du groupe respectif d'éléments de batterie et une deuxième partie de bride (122b) positionnée pour faire face à la première partie de bride (122a), et
dans lequel les parties de bride (122a, 122b, 123a, 123b) comprennent en outre les troisième et quatrième parties de bride (123a, 123b) prévues entre les première et deuxième parties de bride (122a, 122b) afin de recouvrir une surface latérale d'au moins un élément de batterie (10) du groupe respectif d'éléments de batterie.

2. Module de batterie selon la revendication 1, **caractérisé en ce que** chacune des plaques de capuchon (14) comprend des parties de borne (11, 12) et/ou une partie d'évent (13) à travers laquelle le gaz peut être évacué, dans lequel si les plaques de capuchon (14) sont positionnées sur les côtés opposés du groupe respectif d'éléments de batterie, dans chacune des première et deuxième parties de bride (122a, 122b), sont formées des parties d'évidement de borne (H1) correspondant aux parties de borne (11, 12) respectives et/ou une partie d'évidement d'évent (H2) correspondant à la partie d'évent (13).

3. Module de batterie selon la revendication 1, **caractérisé en ce que** chacune des plaques de capuchon (14) comprend des parties de borne (11, 12) et/ou une partie d'évent (13) à travers laquelle le gaz peut être évacué, dans lequel si les plaques de capuchon (14) sont positionnées du même côté du groupe respectif d'éléments de batterie, dans la première partie de bride (122a), sont formées des parties d'évidement de borne (H1) correspondant aux parties de borne (11, 12) respectives et/ou une partie d'évidement d'évent (H2) correspondant à la partie d'évent (13) .

4. Module de batterie selon au moins l'une des revendications précédentes, **caractérisé en ce que** la barrière (120, 220) comprend en outre une pluralité de parties en saillie (125a, 225a) prévues sur le corps principal de barrière (125, 225).

5. Module de batterie selon la revendication 4, **caractérisé en ce que** la pluralité de parties en saillie (125a, 225a) sont agencées de sorte que les parties en saillie (125a, 225a) adjacentes sont espacées à un intervalle (F) prédéterminé.

6. Module de batterie selon au moins l'une des revendications 1 à 5, **caractérisé en ce qu'**une pluralité de trous de réfrigérant (124a, 124b, 224a, 224b) est formée dans les troisième et quatrième parties de bride (123a, 123b) respectivement.

7. Module de batterie selon la revendication 6, **caractérisé en ce que** les trous de réfrigérant (124a, 124b, 224a, 224b) sont positionnés pour correspondre à l'intervalle (F) prédéterminé formé entre les parties en saillie (125a, 225a) adjacentes pour réaliser une pluralité de trajectoires d'écoulement d'un réfrigérant pour refroidir les éléments de batterie (10).

8. Module de batterie selon au moins l'une des revendications précédentes, le module de batterie (1) étant **caractérisé en ce qu'**il comprend un boîtier (110, 210) logeant les éléments de batterie (10) et la barrière (120, 220) .

9. Module de batterie selon la revendication 8, **caractérisé en ce que** le boîtier (110, 210) comprend une paire de plaques d'extrémité (130, 230) espacées l'une de l'autre dans une direction et logeant les éléments de batterie (10), et des supports latéraux (112, 113, 212, 213) raccordant la paire de plaques d'extrémité (130, 230) entre elles.

10. Module de batterie selon l'une quelconque des revendications 1 à 9, **caractérisé en ce que** la paroi de séparation (221) comprend au moins une partie d'évidement (221a) .
